# EUROPÄISCHE PATENTSCHRIFT

(11) **EP 3 413 243 B1**
(45) Veröffentlichungstag und Bekanntmachung des Hinweises auf die Patenterteilung: **13.05.2020**
(21) Anmeldenummer: 18162158.2
(22) Anmeldetag: 16.03.2018
(51) Int. Cl.: G06K 19/077, B60C 23/06, B29D 30/00

(54) **FAHRZEUGREIFEN**
VEHICLE TYRES
PNEU DE VÉHICULE

(30) Priorität: 07.06.2017 DE 102017209546
(43) Veröffentlichungstag der Anmeldung: 12.12.2018
(73) Patentinhaber: Continental Reifen Deutschland GmbH, 30165 Hannover (DE)
(72) Erfinder: Kurz, Martin, 30161 Hannover (DE); Dietrich, Holger, 30938 Burgwedel (DE); Ehmke, Tobias, 30826 Garbsen (DE); Mohr, Daniel, 48653 Coesfeld (DE); Wenckel, Mathias, 30539 Hannover (DE); Bröker, Benjamin, 30823 Garbsen (DE)
(74) Vertreter: Widjaja, Wira

(56) Entgegenhaltungen:
- WO-A1-2018/104623
- JP-A- 2006 188 143
- JP-A- 2013 126 838
- US-A1- 2012 291 936

## Beschreibung

Die Erfindung betrifft einen Fahrzeugreifen.

Transponder können im Reifen für verschiedene Aufgaben eingesetzt werden. Hierzu zählt insbesondere eine Reifenidentifikation mit der ein Automobilhersteller u. a. schnell sowie automatisiert feststellen kann, aus welchem Reifenwerk ein bestimmter Reifen geliefert wurde oder ob der gelieferte Reifen der gewünschten Dimension oder Spezifikation entspricht. Moderne Transponder bestehen aus einem Elektronikbauteil bzw. -Chip, in dem Sensorelemente angeordnet sein können sowie aus einer an dieses Elektronikbauteil angeschlossenen Antenne.
Der Transponder muss in den Herstellungsprozess für Fahrzeugreifen integriert werden. Bei einer bestimmten Materialanspruchung können die Transponder zerstört werden.

Aus dem Stand der Technik sind unterschiedliche Konzepte bekannt, den Transponder im oder am Reifen anzuordnen. Alle herkömmlichen Konzepte besitzen unterschiedliche Nachteile.

Beispielhaft sind in JP 2006 188143A, JP 2013 126838 A und US 2012/291936 A1 Anordnungen von Transpondern in Reifen vorveröffentlicht. Die nicht-vorveröffentlichte WO 2018/104623 A1 zeigt eine weitere Anordnung eines Transponders im Reifen.

Der Erfindung liegt die Aufgabe zugrunde, einen Fahrzeugreifen mit einem Transponder bereitzustellen, bei dem der Transponder auf einfache Weise im Fahrzeugreifen integriert werden kann.

Gelöst wird die Aufgabe gemäß dem Oberbegriff und den kennzeichnenden Merkmalen von Anspruch 1 dadurch, dass
der Transponder zwischen dem äußeren Lagenumschlag der Karkasslage und einem Rimstrip-Bauteil angeordnet ist,
wobei die Höhenabmessung in radialer Richtung des Fahrzeugreifens zwischen dem Transponder und der Unterseite des Kernreiters mindestens 3 mm beträgt.

Ein Vorteil der Erfindung ist insbesondere darin zu sehen, dass durch die neuartige Anordnung des Transponders im Reifenwulst der Transponder dauerhaft vor hohen Materialbeanspruchungen geschützt ist. Der Transponder ist in einem Bereich des Reifenwulstes platziert, der beim Abrollen des Fahrzeugreifens nur sehr geringen Materialbelastungen ausgesetzt ist.
Der Reifenkern mit den Kerndrähten besitzt eine hohe Steifigkeit und kann sich nur sehr wenig verformen. Außerdem wird der Transponder durch den Kernreiter zusätzlich vor Materialbeanspruchungen geschützt.
Das Rimstrip-Bauteil, welches ebenfalls als Wulstband bezeichnet wird, besitzt eine hohe Materialhärte, wodurch der dahinter angeordnete Transponder zusätzlich vor mechanischen Belastungen geschützt wird.
Ein weiterer Vorteil besteht darin, dass der Transponder auf einfache Weise bei der Vorkonfektionierung der Reifenbauteilgruppe aus Reifenkern und Kernreiter an der entsprechenden Position platziert werden kann. Dadurch wird die Zykluszeit an den Reifenbaumaschinen nicht beeinträchtigt.
Ein weiterer Vorteil besteht darin, dass der Transponder erfindungsgemäß im oberen Bereich der Außenseite des Kernreiters angeordnet ist. Dadurch läßt sich eine einfache Funkverbindung mit einer hohen Signalqualität zum Transponder realisieren.

Erfindungsgemäß ist vorgesehen, dass die Höhenabmessung in radialer Richtung des Fahrzeugreifens zwischen dem Transponder und der oberen Spitze des Kernreiters mindestens 5 mm beträgt.
Dadurch ist der Transponder in einem Bereich des Reifenwulstes angeordnet in dem die mechanische Beanspruchung im Fahrbetrieb des Fahrzeugreifens relativ gering ist.

In einer weiteren vorteilhaften Weiterbildung der Erfindung ist vorgesehen, dass der Transponder auf der zur Seitenwand gerichteten Außenseite des Kernreiters angeordnet ist. Dadurch läßt sich von außen eine einfache Funkverbindung mit einer hohen Signalqualität zum Transponder realisieren.

Erfindungsgemäß ist vorgesehen, dass der Kern und der Kernreiter mit einer Gummilage überdeckt sind,
wobei der Transponder zwischen dieser Gummilage und dem äußeren Lagenumschlag der Karkasslage angeordnet ist.
Die Gummilage ist eine gummierte Textil- oder Stahlcordlage und wird als "Flipper-Bauteil" bezeichnet. Sie trägt zur Stabilität des Reifenwulstes bei.
Die Gummilage verbessert den Schutz des Transponders vor mechanischen Belastungen.

In einer vorteilhaften Weiterbildung der Erfindung ist vorgesehen, dass der Transponder mit seinen beiden Antennenteilen in Umfangsrichtung zum Reifenkern ausgerichtet ist. Dadurch besitzt der Transponder eine optimale Ausrichtung im Reifenwulst, um eine optimale Sende- und Empfangsleistung zu gewährleisten.

In einer weiteren vorteilhaften Weiterbildung der Erfindung ist vorgesehen, dass der Transponder ein folienförmiger RFID-Transponder ist,
wobei der Transponder-Chip und die Antennen in einer Trägerfolie eingebettet sind. Folienförmige RFID-Transponder besitzen eine sehr geringe Materialdicke. Durch die hohe Biegsamkeit dieser Transponder sind sie besonders für den Einsatz zwischen Reifenbauteilen geeignet.
Bei einer alternativen Ausführungsform ist der Transponder einseitig auf einer Trägerfolie aufgebracht.

In einer weiteren vorteilhaften Weiterbildung der Erfindung ist vorgesehen, dass die Trägerfolie eine Materialdicke von kleiner als 1 mm besitzt.

Bei dieser Materialdicke besitzt der folienförmige RFID-Transponder eine besonders hohe Flexibilität. Das flexible Kunststoffmaterial lässt sich gut mit dem Gummimaterial der umgebenden Reifenbauteile verbinden.

In einer weiteren vorteilhaften Weiterbildung der Erfindung ist vorgesehen, dass die Trägerfolie aus einem flexiblen Kunststoff besteht.
In einer weiteren vorteilhaften Weiterbildung der Erfindung ist vorgesehen, dass der folienförmige Transponder eine zusätzliche Materialbeschichtung aufweist.

Durch diese Materialbeschichtung lässt sich die Verbindung zu den angrenzenden Reifenbauteilen verbessern.
In einer weiteren vorteilhaften Weiterbildung der Erfindung ist vorgesehen, dass die Materialbeschichtung ein Gummimaterial umfasst.

In einer weiteren vorteilhaften Weiterbildung der Erfindung ist vorgesehen, dass die Materialbeschichtung ein Haftvermittlersystem umfasst,
wobei mit dem Haftvermittlersystem die Anbindung an die umgebenden Reifenbauteile verbessert wird.
Das Haftvermittlersystem könnte beispielsweise eine chemische Lösung sein, die auf den folienförmigen RFID-Transponder aufgetragen wird, um die Anbindung zu den angrenzenden Reifenbauteilen zu verbessern. Es könnte sich dabei auch um eine chemische Lösung handeln, die erst bei der Reifenvulkanisation aktiviert wird.

In einer weiteren vorteilhaften Weiterbildung der Erfindung ist vorgesehen, dass der Transponder eine Breite zwischen 3 und 20 mm, vorzugsweise 3 bis 15 mm, sowie eine Länge zwischen 30 und 100 mm, vorzugsweise 3 bis 80 mm, aufweist.
Bei diesen Abmessungen des Transponders lässt sich dieser auf einfache Weise zwischen den Reifenbauteilen anordnen.

In einer weiteren vorteilhaften Weiterbildung der Erfindung ist vorgesehen, dass der Transponder ein Transponder mit zwei spiralförmigen Antennen ist.

Diese Art von Transpondern weisen eine hohe Dauerhaltbarkeit auf und eigenen sich daher für den Einsatz zwischen Reifenbauteilen.

In einer weiteren vorteilhaften Weiterbildung der Erfindung ist vorgesehen, dass der Transponder mit den zwei spiralförmigen Antennen zwischen zwei Materialagen aus Gummimaterial eingebettet ist.
Dadurch wird die Dauerhaltbarkeit des Transponders wesentlich verbessert.

In einer weiteren vorteilhaften Weiterbildung der Erfindung ist vorgesehen, dass der Transponder bei der Vorkonfektionierung der Reifenbauteilgruppe aus Reifenkern und Kernreiter aufgebracht wird.
Der Transponder lässt sich bei der Vorkonfektionierung dieser Reifenbauteilgruppe einfach auf der Außenseite des Kernreiters platzieren.

In einer weiteren vorteilhaften Weiterbildung der Erfindung ist vorgesehen, dass der Transponder im Fahrzeugreifen in Verbindung mit einer Vorrichtung zur indirekten Überwachung eines Reifendruckes genutzt wird,
wobei die Vorrichtung für die indirekte Überwachung eine Information zu einem Reifenwechsel von dem Transponder erhält.
Der Transponder besitzt eine individuelle Reifenidentifikation. Das Fahrzeug besitzt z.B. im Radhaus eine Lesegerät zum Auslesen der Reifenidentifikation. Bei einem Reifenwechsel erkennt die Vorrichtung für die indirekte Überwachung, dass ein neuer Reifen montiert worden ist und führt anschließend automatisch ein Systemreset durch. Die Vorrichtung für die indirekte Überwachung des Reifendruckes werden ebenfalls als Deflation Detection System (DDS) bezeichnet.
Bei herkömmlichen Vorrichtung für eine indirekte Überwachung des Reifendruckes muss der Fahrer immer nach einem Reifenwechsel den Systemreset manuell durchführen. Außerdem sind auf dem Transponder weitere Informationen gespeichert, durch die die Vorrichtung für die indirekte Überwachung mit einer höheren Genauigkeit arbeiten kann. Diese Informationen umfassen Angaben zum Hersteller, zur Reifendimension, zum exakten Reifenumfang und zur Reifenkonstruktion.

Anhand mehrerer Ausführungsbeispiele soll die Erfindung näher erläutert werden. Es zeigen:
- Fig. 1:: einen Reifenwulst
- Fig. 2:: eine Aufsicht auf den folienförmige RFID-Transponder
- Fig. 3:: eine Aufsicht auf den Transponder mit spiralförmigen Antennen

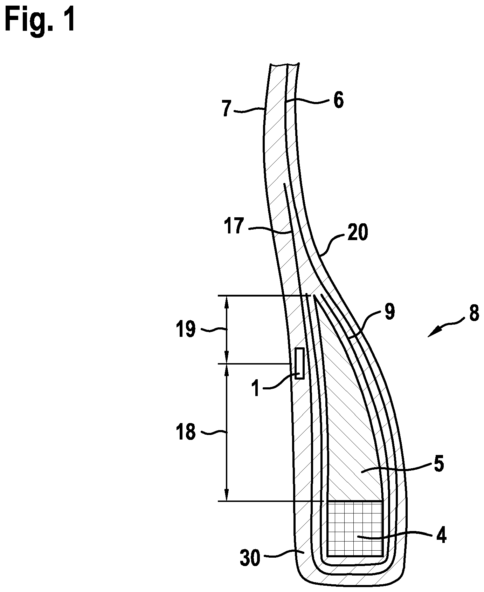

Die Figur 1 zeigt schematisch den Querschnitt eines Reifenwulstes 8. Der Transponder 1 ist zwischen dem äußeren Lagenumschlag 17 der Karkasslage 6 und dem Rimstrip-Bauteil 30 angeordnet. Die Karkasslage 6 bildet im Reifenwulst 8 einen Lagenumschlag 17, der um den Kernreiter 5 und den Reifenkern 4 herumgeführt ist. Der Reifenkern 4 umfasst eine Vielzahl von Drahtkernen und hat daher eine sehr hohe Materialsteifigkeit. Durch diese Materialsteifigkeit des Reifenkerns ist der Transponder in einer besonders beruhigten Materialzone des Fahrzeugreifens angeordnet, die nur geringen Materialbelastungen ausgesetzt ist.
Um den Kernreiter 5 und den Reifernkern 4 ist optional eine zusätzliche Gummilage 9 angeordnet, die ebenfalls als "Flipper-Bauteil" bezeichnet wird.
Die Höhe 18 zwischen Transponder 1 und Unterseite des Kernreiters 5 beträgt mindestens 3 mm, vorzugsweise mindestens 5 mm oder mindestens 7 mm. Durch die höhere Positionierung des Transponders 1 läßt sich die Signalübertragung zum Empfangsgerät besser realisieren.
Außerdem beträgt die Höhe 19 zwischen Transponder 1 und der Spitze des Kernreiters 5 mindestens 5 mm, vorzugsweise mindestens 7 mm oder mindestens 9 mm.
Die Daten des Transponders lassen sich dadurch sehr gut mit einem externen Lesegerät auslesen.

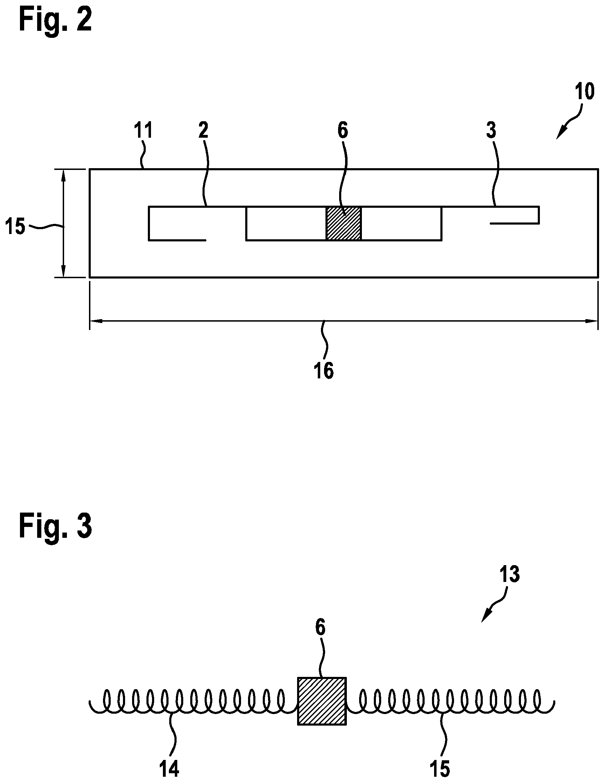

Die Figur 2 zeigt eine Aufsicht auf den folienförmigen RFID-Transponder. Der Transponder umfasst im Wesentlichen in der Mitte den Transponder-Chip 6 und die beiden angebundenen Antennen 2 und 3. Alle Bauteile sind in eine Trägerfolie 11 eingebettet, die aus Kunststoff besteht und eine hohe Flexibilität besitzt. Die Materialdicke des folienförmigen RFID-Transponders beträgt weniger als 1 mm. Die Länge 16 des Transponders beträgt zwischen 30 und 80 mm. Die Breite 15 des Transponders beträgt zwischen 3 und 15 mm.

Die Figur 3 zeigt ein Ausführungsbeispiel für einen Transponder mit zwei spiralförmigen Antennen 13 und 14, die an den Transponder-Chip 6 angebunden sind.
Die Antennen 13 und 14 bestehen aus einem Metall und besitzen eine hohe Dauerfestigkeit.
Der Transponder 13 kann optional zwischen zwei Materialstreifen aus Gummi eingebettet sein, bevor er bei der Vorkonfektionierung zwischen dem Reifenkern und dem Kernreiter platziert wird.

### Bezugszeichenliste

(ist Teil der Beschreibung)
- 1: Transponder
- 2: linke Antenne
- 3: rechte Antenne
- 4: Reifenkern
- 5: Kernreiter bzw. Apex
- 6: Karkasslage
- 7: Seitenwand
- 8: Reifenwulst
- 9: Gummilage
- 10: Folienförmiger RFID-Transponder
- 11: Trägerfolie
- 12: Länge des Folienförmigen RFID-Transponders
- 13: Transponder mit zwei spiralförmigen Antennen
- 14: Linke spiralförmige Antenne
- 15: Rechte spiralförmige Antenne
- 16: Länge des Transponders
- 17: Äußere Lagenumschlag der Karkasslage
- 18: Höhe zwischen Transponder und Unterseite des Kernreiters
- 19: Höhe zwischen Transponder und Spitze des Kernreiters
- 20: Reifeninnenseite bzw. Reifeninnenseele
- 30: Rimstrip-Bauteil

## Patentansprüche

1. Fahrzeugreifen mit einem Laufstreifen, einem Reifengürtel, einer Reifenkarkasse mit mindestens einer Karkasslage, Seitenwänden (7) und einem Reifenwulst (8) mit einem Reifenkern (4) sowie einem Kernreiter (5),
wobei der Reifenkern (4) im Querschnitt eine Vielzahl von Festigkeitsträgern umfasst und der Kernreiter (5) auf seiner Unterseite an der Oberseite des Reifenkerns (4) angebunden ist,
wobei der Transponder (1) einen Transponderchip (6) und eine an den Transponderchip (6) angebundende Antenne (2, 3, 14, 15) aufweist,
der Transponder (1) zwischen dem äußeren Lagenumschlag (17) der Karkasslage (6) und einem Rimstrip-Bauteil (30) angeordnet ist,
wobei die Höhenabmessung (18) in radialer Richtung des Fahrzeugreifens zwischen dem Transponder (1) und der Unterseite des Kernreiters (5) mindestens 3 mm beträgt **dadurch gekennzeichnet, dass**
der Transponder (1) im oberen Bereich der Außenseite des Kernreiters (5) angeordnet ist, wobei die Höhenabmessung (19) in radialer Richtung des Fahrzeugreifens zwischen dem Transponder (1) und der oberen Spitze des Kernreiters (5) mindestens 5 mm beträgt, wobei der Kern (4) und der Kernreiter (5) mit einer Gummilage (9) überdeckt sind.

2. Fahrzeugreifen nach Anspruch 1,
**dadurch gekennzeichnet, dass**
die Höhenabmessung (19) in radialer Richtung des Fahrzeugreifens zwischen dem Transponder (1) und der oberen Spitze des Kernreiters (5) mindestens 7 bis 9 mm beträgt.

3. Fahrzeugreifen nach einem der vorhergehenden Ansprüche,
**dadurch gekennzeichnet, dass**
der Transponder (1) mit seinen beiden Antennenteilen (2, 3, 14, 15) in Umfangsrichtung zum Reifenkern (4) ausgerichtet ist.

4. Fahrzeugreifen nach einem der vorhergehenden Ansprüche,
**dadurch gekennzeichnet, dass**
der Transponder (1) ein folienförmiger RFID-Transponder (10) ist,
wobei der Transponder-Chip (6) und die Antennen (2, 3) in einer Trägerfolie (16) eingebettet sind.

5. Fahrzeugreifen nach einem der vorhergehenden Ansprüche,
**dadurch gekennzeichnet, dass**
die Trägerfolie (16) eine Materialdicke von kleiner als 1mm besitzt.

6. Fahrzeugreifen nach einem der vorhergehenden Ansprüche,
**dadurch gekennzeichnet, dass**
die Trägerfolie (16) aus einem flexiblen Kunststoff besteht.

7. Fahrzeugreifen nach einem der vorhergehenden Ansprüche,
**dadurch gekennzeichnet, dass**
der folienförmige Transponder (10) eine zusätzliche Materialbeschichtung aufweist.

8. Fahrzeugreifen nach einem der vorhergehenden Ansprüche,
**dadurch gekennzeichnet, dass**
die Materialbeschichtung ein Gummimaterial umfasst.

9. Fahrzeugreifen nach einem der vorhergehenden Ansprüche,
**dadurch gekennzeichnet, dass**
die Materialbeschichtung ein Haftvermittlersystem umfasst,
wobei mit dem Haftvermittlersystem die Anbindung an die umgebenden Reifenbauteile verbessert wird.

10. Fahrzeugreifen nach einem der vorhergehenden Ansprüche,
**dadurch gekennzeichnet, dass**
der Transponder (1, 10, 13) eine Breite zwischen 3 und 20 mm, vorzugsweise zwischen 3 bis 15 mm, sowie eine Länge (16) zwischen 30 und 100 mm, vorzugsweise zwischen 30 bis 80 mm, aufweist.

11. Fahrzeugreifen nach einem der vorhergehenden Ansprüche,
**dadurch gekennzeichnet, dass**
der Transponder (1) ein Transponder (13) mit zwei spiralförmigen Antennen ist.

12. Fahrzeugreifen nach einem der vorhergehenden Ansprüche,
**dadurch gekennzeichnet, dass**
der Transponder (13) mit den zwei spiralförmigen Antennen zwischen zwei Materialagen aus Gummimaterial eingebettet ist.

## Claims

1. Vehicle tyre having a tread, having a tyre belt, having a tyre carcass with at least one carcass ply, having sidewalls (7) and having a tyre bead (8) with a tyre core (4) and a bead filler (5),
wherein the tyre core (4) comprises, in cross section, a multiplicity of strengthening members, and the bead filler (5) is attached on its bottom side to the top side of the tyre core (4),
wherein the transponder (1) has a transponder chip (6) and an antenna (2, 3, 14, 15) attached to the transponder chip (6),
the transponder (1) is arranged between the outer ply turn-up (17) of the carcass ply (6) and a rim strip component (30),
wherein the height dimension (18) in a radial direction of the vehicle tyre between the transponder (1) and the bottom side of the bead filler (5) amounts to at least 3 mm,
**characterized in that**
the transponder (1) is arranged in the upper region of the outer side of the bead filler (5), wherein the height dimension (19) in a radial direction of the vehicle tyre between the transponder (1) and the upper tip of the bead filler (5) amounts to at least 5 mm, wherein the core (4) and the bead filler (5) are covered with a rubber ply (9).

2. Vehicle tyre according to Claim 1,
**characterized in that**
the height dimension (19) in a radial direction of the vehicle tyre between the transponder (1) and the upper tip of the bead filler (5) amounts to at least 7 to 9 mm.

3. Vehicle tyre according to any of the preceding claims,
**characterized in that**
the transponder (1) is oriented with its two antenna parts (2, 3, 14, 15) in a circumferential direction with respect to the tyre core (4).

4. Vehicle tyre according to any of the preceding claims,
**characterized in that**
the transponder (1) is an RFID transponder (10) in foil form,
wherein the transponder chip (6) and the antennae (2, 3) are embedded in a carrier foil (16).

5. Vehicle tyre according to any of the preceding claims,
**characterized in that**
the carrier foil (16) has a material thickness of less than 1 mm.

6. Vehicle tyre according to any of the preceding claims,
**characterized in that**
the carrier foil (16) is composed of a flexible plastic.

7. Vehicle tyre according to any of the preceding claims,
**characterized in that**
the transponder (10) in foil form has an additional material coating.

8. Vehicle tyre according to any of the preceding claims,
**characterized in that**
the material coating comprises a rubber material.

9. Vehicle tyre according to any of the preceding claims,
**characterized in that**
the material coating comprises an adhesion promoter system,
wherein the attachment to the surrounding tyre components is improved by means of the adhesion promoter system.

10. Vehicle tyre according to any of the preceding claims,
**characterized in that**
the transponder (1, 10, 13) has a width between 3 and 20 mm, preferably between 3 to 15 mm, and a length (16) between 30 and 100 mm, preferably between 30 to 80 mm.

11. Vehicle tyre according to any of the preceding claims,
**characterized in that**
the transponder (1) is a transponder (13) with two spiral-shaped antennae.

12. Vehicle tyre according to any of the preceding claims,
**characterized in that**
the transponder (13) with the two spiral-shaped antennae is embedded between two material plies composed of rubber material.

## Revendications

1. Pneumatique de véhicule comprenant une bande de roulement, une nappe d'armature de pneumatique, une carcasse de pneumatique pourvue d'au moins une couche de carcasse, des parois latérales (7) et un talon de pneumatique (8) pourvu d'une tringle de pneumatique (4) et d'un apex (5),
la tringle de pneumatique (4) comprenant en coupe transversale une pluralité de renforts et l'apex (5) étant relié sur son côté inférieur au côté supérieur de la tringle de pneumatique (4),
le transpondeur (1) comportant une puce de transpondeur (6) et une antenne (2, 3, 14, 15) reliée à la puce de transpondeur (6),
le transpondeur (1) étant disposé entre l'enveloppe extérieure (17) de la couche de carcasse (6) et un composant de bande de jante (30),
la dimension en hauteur (18) dans la direction radiale du pneumatique de véhicule entre le transpondeur (1) et le côté inférieur de l'apex (5) étant d'au moins 3 mm,
**caractérisé en ce que**
le transpondeur (1) est disposé dans la région supérieure du côté extérieur de l'apex (5), la dimension en hauteur (19) dans la direction radiale du pneumatique de véhicule entre le transpondeur (1) et la pointe supérieure de l'apex (5) étant d'au moins 5 mm, la tringle (4) et l'apex (5) étant recouverts d'une couche de caoutchouc (9).

2. Pneumatique de véhicule selon la revendication 1,
**caractérisé en ce que**
la dimension en hauteur (19) dans la direction radiale du pneumatique de véhicule entre le transpondeur (1) et la pointe supérieure de l'apex (5) est d'au moins 7 à 9 mm.

3. Pneumatique de véhicule selon l'une des revendications précédentes,
**caractérisé en ce que**
le transpondeur (1) pourvu de ses deux parties d'antenne (2, 3, 14, 15) est orienté dans la direction circonférentielle par rapport à la tringle de pneumatique (4).

4. Pneumatique de véhicule selon l'une des revendications précédentes,
**caractérisé en ce que**
le transpondeur (1) est un transpondeur RFID en forme de film (10),
la puce de transpondeur (6) et les antennes (2, 3) étant intégrées dans un film support (16).

5. Pneumatique de véhicule selon l'une des revendications précédentes,
**caractérisé en ce que**
le film support (16) a une épaisseur de matériau inférieure à 1 mm.

6. Pneumatique de véhicule selon l'une des revendications précédentes,
**caractérisé en ce que**
le film support (16) est en une matière plastique flexible.

7. Pneumatique de véhicule selon l'une des revendications précédentes,
**caractérisé en ce que**
le transpondeur (10) en forme de film comporte un revêtement de matière supplémentaire.

8. Pneumatique de véhicule selon l'une des revendications précédentes,
**caractérisé en ce que**
le revêtement de matière comprend un matériau caoutchouteux.

9. Pneumatique de véhicule selon l'une des revendications précédentes,
**caractérisé en ce que**
le revêtement de matière comprend un système promoteur d'adhérence,
la liaison avec les composants de pneumatique environnants étant améliorée grâce au système promoteur d'adhérence.

10. Pneumatique de véhicule selon l'une des revendications précédentes,
**caractérisé en ce que**
le transpondeur (1, 10, 13) a une largeur comprise entre 3 et 20 mm, de préférence entre 3 et 15 mm, et une longueur (16) comprise entre 30 et 100 mm, de préférence entre 30 et 80 mm.

11. Pneumatique de véhicule selon l'une des revendications précédentes,
**caractérisé en ce que**
le transpondeur (1) est un transpondeur (13) à deux antennes en spirale.

12. Pneumatique de véhicule selon l'une des revendications précédentes,
**caractérisé en ce que**
le transpondeur (13) pourvu des deux antennes en spirale est incorporé entre deux couches de matériau caoutchouteux.
